Europäisches Patentamt

(19) European Patent Office

Office européen des brevets

(11) Publication number: **0 118 627**
**B1**

(12) **EUROPEAN PATENT SPECIFICATION**

(45) Date of publication of patent specification: **16.03.88**

(51) Int. Cl.⁴: **H 02 G 15/105, H 01 R 4/64**

(21) Application number: **83201734.7**

(22) Date of filing: **07.12.83**

(54) Electrically conductive connection with clamping strips.

(30) Priority: **08.12.82 NL 8204762**

(43) Date of publication of application:
**19.09.84 Bulletin 84/38**

(45) Publication of the grant of the patent:
**16.03.88 Bulletin 88/11**

(84) Designated Contracting States:
**BE DE FR GB NL**

(56) References cited:
**CH-A- 264 429**
**DE-A-2 204 163**
**DE-B-2 234 413**
**FR-A-2 002 225**
**FR-A-2 412 918**

(73) Proprietor: **Lovink-Terborg B.V.**
**Lovinkweg, 3**
**NL-7061 DT Terborg (NL)**

(72) Inventor: **Slooter, Arie Cornelis**
**No. 98, Industrieweg**
**NL-7061 AV Terborg (NL)**
Inventor: **Van den Hout, Jan Simon**
**No. 3, Eksterhof**
**NL-7051 WP Varsseveld (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to an electrically conductive connection between at least two cable ends.

Such a connection is known in various forms, e.g. from CH—A—264 429.

For example, a soldering technique is sometimes used. Soldering provides a satisfactory connection, but the quality strongly depends on the accuracy with which the job is carried out. There is furthermore the risk of local excessive heating of the cable or the cable sleeve surrounding the joint so that the cable or its surroundings may be damaged.

It is furthermore known to use a screw clamp. The use of a worm screw clamp, generally termined hose clamp, is very critical with respect to the tightening moment. Particularly in the case of a soft cable sheath deformation of the sheath soon occurs or the established connection is of doubtful quality.

Sometimes the sheath of the cable itself is incised in a given manner, after which the sheath itself is used by deformation as a through-connection (lead slab). Apart from the fact that the operation concerned is critical and requires much skill, the operation is not conducive to the quality of the cable, whilst under given conditions it is not possible to locally incise the sheath.

Reference is furthermore made to the known use of a roller spring, below which a flexible conductor is clamped. Although this embodiment is less critical with respect to the cable diameter and interruption of the cable is not necessary, this solution has the inconveniences that the contact with the flexible conductor is established over only a small part of the cable sheath circumference and the spring material selected has to offer a compromise between a satisfactory electric conductivity and a satisfactory spring force. Apart therefrom, the pressure produced by the spring is comparatively slight, which results in that the transition resistance is not so low as is basically possible. The spring is furthermore, not capable of compensating for any non-circular shape of the sheath and the spring itself even disturbs the circular shape by unilaterally clamping the flexible conductor.

Finally there is mentioned a construction forming part of a cable garniture to be employed. A lead-enveloped rubber ring is concentrically pressed around the cable between two metal plates. This construction has a few drawbacks. It is necessary to tighten a number of bolts, which is a circuitous operation. It is necessary under all conditions to interrupt the cable, since the construction is formed by a closed ring. The pressure force should be comparatively heavy with respect to the transitional resistance in a contact between lead and lead and, moreover, the construction itself serves as a seal. The risk of a permanent deformation of the cable sheath is great. Apart therefrom, the dimensions of this construction are very critical and the construction is an expensive component.

The invention has for its object to overcome the drawbacks of the known technique.

In order to achieve said objects the invention generally provides a connection of the type set forth in the preamble, which is characterized by a respective electrical conductor at each cable end,

each conductor extending in a closed loop which is bent about the grounded metal sheath of the cable at the cable end and is pressed against the cable sheath by two semicircular clamping cheeks pivotable relative to one another at one end and drawn towards one another by means of a spring-loaded draw screw at their other ends,

the electrical conductors being interconnected. In this way it is generally ensured that the conductivity of the conductor is utilized twice. Furthermore, it is ensured that the termination, e.g. a cable shoe, is needed only once.

With a connection, in which the one or more of the electrical conductors is arranged with its loop in a straddling manner around the cable sheath concerned, the conductor and the clamp can be positioned at any desired place on the cable sheath without the need of interrupting or disconnecting the cable.

The invention furthermore proposes to construct a connection of the kind set forth in a manner such, that the electrical conductor consists of woven wires and in that the draw screw of the clamping cheeks is inserted through the electrical conductor.

An embodiment in which the draw screw is loaded by at least one cup spring has the advantage that the force by which the conductor is pressed against the cable sheath is independent over a large range of the extent of tightening elements of the clamping cheeks.

The invention will now be explained with reference to the accompanying drawing, which shows in:

Fig. 1 an elevational view of an opened cable sleeve with a connection in accordance with the invention,

Fig. 2 a cable end with a conductor and a clamping strip in accordance with the invention in a first configuration,

Fig. 3 a cable end with a conductor and a clamping strip embodying the invention in a second configuration,

Fig. 4 a perspective view of a preferred embodiment of the clamping strip and

Fig. 5 is a fragmentary front view of part of the clamping strip of Fig. 4.

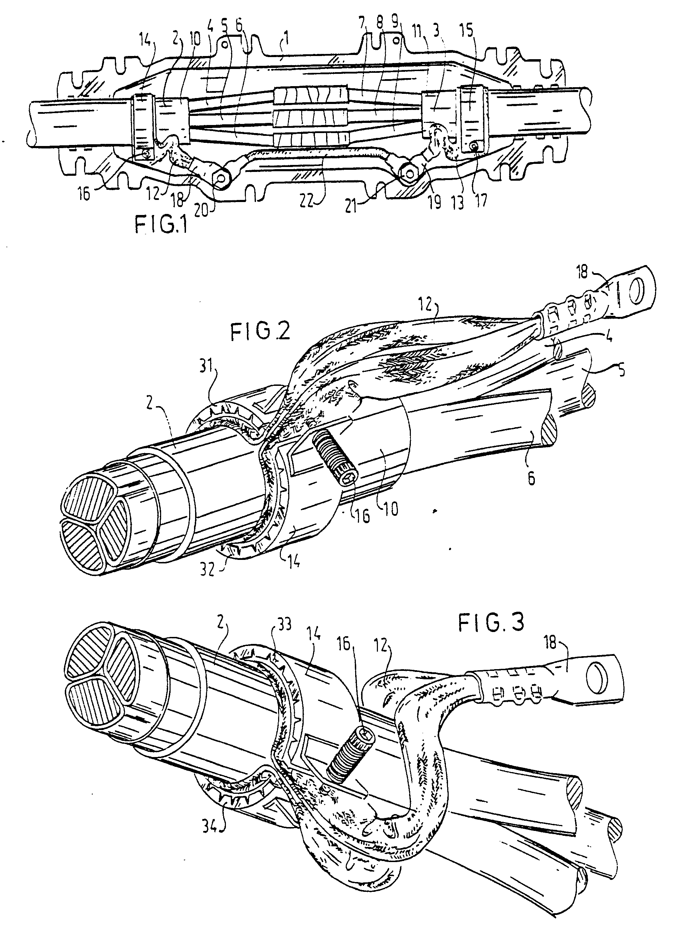

Fig. 1 shows the bottom part of a cable sleeve in which are lying the cable ends 2, 3. The cores of the cable ends 2, 3 are electrically interconnected. The sheaths 10, 11 of the cable ends 2, 3 are electrically conductive. Around these sheaths 10, 11 are passed conductors 12, 13, which are pressed against the conductive sheaths 10, 11 by clamping strips 14, 15. The clamping strips 14, 15 are tightened by means of screws 16, 17. The conductors 12, 13 are provided with cable shoes 18, 19, by which they are interconnected by screw joints 20, 21 through a fixed conductor 22 on the bottom 1.

Fig. 2 shows on an enlarged scale how the conductor 12 is constructed in loop-like fashion. In the configuration shown in Fig. 2 the loop has obviously to be arranged via the free end of the cable end 2. This configuration cannot be used for a non-interrupted cable. It is noted in this regard that such non-interrupted cables often occur. In this case the cable is locally worked and deprived of insulation in order to branch a further cable.

The configuration of Fig. 3 is suitable for use with non-interrupted cables. It is noted that all components of both the conductor 12 and the clamping strip 14 are identical to those of Fig. 1. The sole difference is that as is shown in Fig. 3 the loop-shaped conductor 12 is bent back on both sides in a straddling manner around the cable end 2.

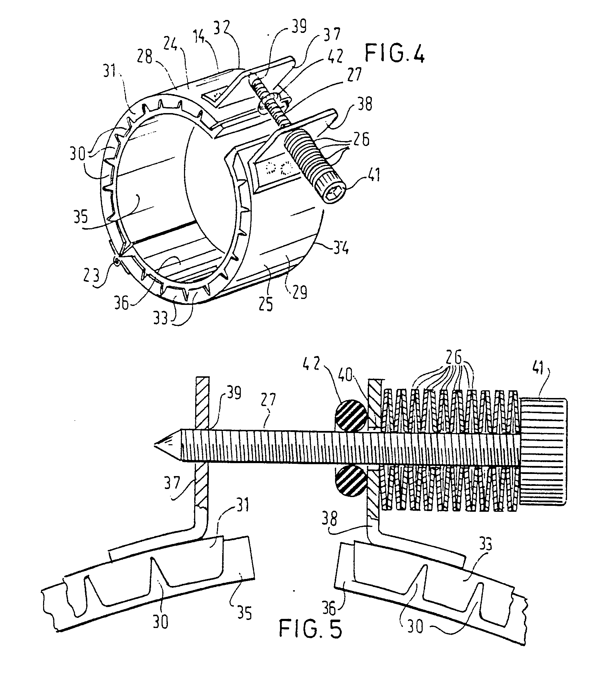

Fig. 4 shows a clamping strip 14. It comprises two semicircular clamping cheeks 24, 25, which are interconnected at one end by means of a hinge 23 and which can be drawn towards one another at their other ends by a draw screw 27 loaded by a plurality of cup springs 26. Each clamping cheek 24, 25 consists of an outer wall part 28, 29 with inwardly bent-over, locally incised rims 31, 32 and 33, 34 respectively and an inner wall part 35, 36 of silicon rubber arranged between said rims 31, 32 and 33, 34. The ends of the clamping cheeks 24, 25 remote from the hinge 23 have substantially radially extending plates 37, 38. The plate 37 has a tapped hole 39. The plate 38 has a bore 40 for passing the screw 27.

Fig. 5 clearly shows that between the plate 38 and the head 41 of the screw 27 having a sharp tip for penetrating through the woven conductor sleeve 12 there is arranged a plurality of alternating cup springs 26. The advantage of such cup springs is that upon tightening, directly after the beginning of the deformation a given counterforce is produced, which increases relatively little when tightening further so that tightening the screw 27 is relatively little critical. A known helical spring, on the contrary, exhibits an appreciably steeper course of the spring characteristic curve. For this reason cup springs are preferred in the scope of the present invention.

In order to ensure that the tightening force is effectively transferred to the cable, the silicon rubber inner wall parts 35, 36 are clamped in on three sides by the outer wall part 28, the rims 31 and 32 and the outer wall part 29 and the rims 33, 34. Therefore, the inner wall parts 35, 36 are enclosed so that upon deformation in one direction they cannot deflect in a free direction.

The incisions 30, which are uniformly distributed along the length of the rims 31, 32, 33, 34, ensure the relative flexibility of the clamping cheeks 24, 25, which is necessary to compensate for diameter tolerances of a cable to be enclosed.

A guard ring 42 has to ensure that the screw 27, even in the opened state of the clamping strip 14, remains coupled with the plate 38.

## Claims

1. An electrically conductive connection between at least two cable ends (2, 3) characterized by

a respective electrical conductor (12 or 13) at each cable end (2 or 3),

each conductor (12 or 13) extending in a closed loop which is bent about the grounded metal sheath (10 or 11) of the cable at the cable end (2 or 3) and is pressed against the cable sheath (10 or 11) by two semicircular clamping cheeks (24, 25) pivotable relative to one another at one end and drawn towards one another by means of a spring-loaded draw screw (26) at their other ends,

the electrical conductors (12, 13) being interconnected.

2. The connection according to claim 1, characterized in that one or more of the electrical conductors (12 or 13) is arranged with its loop in a straddling manner around the cable sheath (10 or 11) concerned.

3. The connection according to claim 1 or 2, characterized in that the electrical conductor (12, 13) consists of woven wires and in that the draw screw (27) of the clamping cheeks (24, 25) is inserted through the electrical conductor (12, 13).

4. The connection according to any one of the preceding claims, characterized in that the draw screw (27) is loaded by at least one cup spring (26).

## Patentansprüche

1. Elektrisch leitende Verbindung zwischen wenigstens zwei Kabelenden (2, 3), dadurch gekennzeichnet, daß sich an jedem Kabelende (2 oder 3) jeweils ein elektrischer Leiter (12 oder 13) befindet, der zu einer geschlossenen Schlaufe verlängert ist, die am Kabelende (2 oder 3) um die geerdete Metallhülle (10 oder 11) des Kabels gebogen ist und von zwei halbbogenförmigen Klemmbacken (24, 25) gegen die Kabelhülle (10 oder 11) gepreßt wird, wobei die Klemmbacken (24, 25) an ihrem einen Ende gegeneinander schwenkbar sind und an ihrem anderen Ende mit Hilfe einer federbelasteten Zugschraube (27) gegeneinandergezogen sind, wobei die elektrischen Leiter (12, 13) miteinander verbunden ist.

2. Verbindung nach Anspruch 1, dadurch gekennzeichnet, daß einer oder mehrere der elektrischen Leiter (12) oder 13) mit seiner Schlaufe auf der betreffenden Kabelhülle (10 oder 11) rittlings angeordnet ist.

3. Verbindung nach Anspruch 1 oder 2, dadurch gekennzeichnet, daß der elektrische Leiter (12, 13) aus verwobenen Drähten besteht und daß die Zugschraube (27) der Klemmbacken (24, 25) durch den elektrischen Leiter (12, 13) hindurchgeführt ist.

4. Verbindung nach einem der vorangehenden Ansprüche, dadurch gekennzeichnet, daß die Zugschraube (27) von wenigstens einer Tellerfeder (26) belastet wird.

**Revendications**

1. Connexion conductrice électrique entre au moins deux extrémités de câble (2, 3), caractérisée par un conducteur électrique respectif (12, 13) à chaque extrémité (2, 3) du câble, chaque conducteur (12, 13) s'étendant suivant une boucle fermée qui est repliée autour de la gaine électrique (10, 11) du câble à la masse, à l'extrémité du câble (2, 3) et est pressée contre la gaine (10, 11) du câble par deux joues de serrage (24, 25) semi-circulaires articulées l'une par rapport à l'autre à une extrémité et tirées l'une vers l'autre au moyen d'une vis de serrage (27) sollicitée élastiquement, à leurs autres extrémités, les conducteurs électriques (12, 13) étant reliés entre eux.

2. Connexion suivant la revendication 1, caractérisée en ce qu'un ou plusieurs des conducteurs électriques (12, 13) sont agencés avec leur boucle de façon à entourer la gaine (10, 11) du câble concerné.

3. Connexion suivant la revendication 1 ou 2, caractérisée en ce que le conducteur électrique (12, 13) consiste en des fils de métal tissés et en ce que la vis de serrage (27) des joues de serrage (24, 25) est introduite à travers le conducteur électrique (12, 13).

4. Connexion suivant l'une quelconque des revendications précédentes, caractérisée en ce que la vis de serrage (27) est sollicitée par au moins une rondelle Belleville (26).

FIG.1

FIG.2

FIG.3

FIG.4

FIG.5